# EUROPEAN PATENT APPLICATION

(11) **EP 3 553 733 A1**
(43) Date of publication of application: **16.10.2019**
(21) Application number: 18167043.1
(22) Date of filing: 12.04.2018
(51) Int. Cl.: G06Q 40/02, G06Q 20/02, G06Q 20/38, G06Q 20/36, G06Q 20/22, H04L 9/32

(54) **METHOD FOR CONTROLLING A SMART CONTRACT IN A NETWORK IMPLEMENTING A DISTRIBUTED LEDGER**

(71) Applicant: Jur AG, 6360 Baar (CH)
(72) Inventor: PALOMBO, Alessandro, 6300 Zug (CH); DE FILIPPI, Giotto, 68419 Panama City (PA); BONOMO, Pietro, 8800-541 Santa Luzia (PT)
(74) Representative: Kraus & Weisert Patentanwälte PartGmbB

(57) **Abstract**

The present invention relates to a method (3000) for controlling a smart contract (4000) in a network (2000) implementing a distributed ledger, the network (2000) comprising a plurality of transaction addresses (1101-1103) and a plurality of voting addresses (2301-2303), the method (3000) comprising the steps of: defining (S3100) details (4500, 4600, 4700) of a smart contract (4000), wherein the details (4500, 4600, 4700) comprise at least an escrow amount (4700) and conditions (4500) for dispersing the escrow amount (4700), accepting (S3200) the details (4500, 4600, 4700) of the smart contract (4000), evaluating (S3300) fulfillment of the conditions (4500), based on the result of the evaluating step (S3300) dispersing the escrow amount (S3400) or entering a dispute resolution step (S3500).

## Description

The present invention generally relates to a method for controlling a smart contract in a network implementing a distributed ledger. More specifically, it relates to the introduction of a dispute resolution approach, which allows disputes concerning the smart contract to be solved through the network implementing a distributed ledger.

### Prior art

Distributed ledgers are becoming a more common technology for certifying and tracking several kinds of assets, such as cryptocurrencies, contracts, but also documents such as certifications, medical records, identify documents, etc. The distributed ledgers also provide means for recording transactions related to assets or documents. Namely modification to the asset or documents, be it a modification to its content or to its owner, can be recorded in a reliable manner by a distributed ledger.

Several kinds of distributed ledgers are available, based on different technologies, such as blockchain, Hashgraph, etc. In general they all share the common concept that the network implementing the distributed ledger comprises a plurality of transaction addresses and a plurality of ledger computing nodes. The transactions among the transaction addresses are recorded by the ledger computing nodes with a computationally intensive approach, which provides the security of the distributed ledgers with respect to brute force hacker attacks.

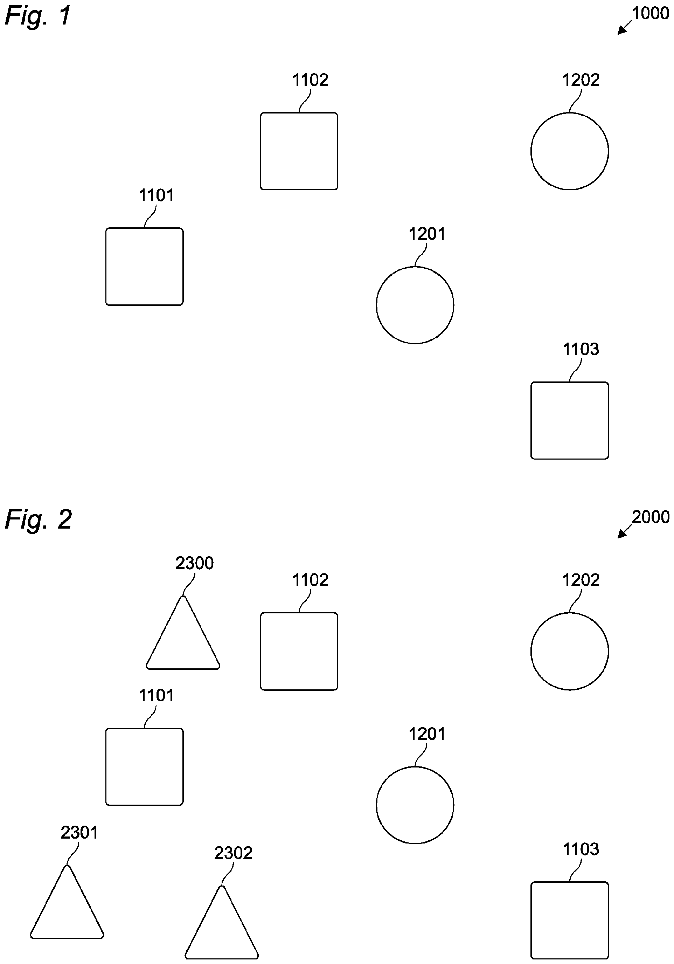

Figure 1 schematically illustrates a network 1000 implementing a distributed ledger in accordance with the state of the art, comprising a plurality of transaction addresses 1103-1103 and a plurality of ledger computing nodes 1201-1202. The distributed ledger could be, for instance, Ethereum. In this case the ledger computing nodes 1201-1202 are configured to run one or more smart contracts for allowing any of the transaction addresses 1101-1103 to perform several kinds of transactions which are then recorded in the distributed ledger, in the case of Ethereum implemented with a blockchain implementation.

In general, in distributed ledgers such as the one illustrated in figure 1, any transaction address 1101-1103 can perform transactions with any other transaction address 1101-1103. One characteristic of distributed ledgers such as those illustrated in figure 1 consists in the fact that the transaction addresses 1101-1103 are identified as address in the network 1000 and the respective owners remain otherwise anonym.

This can often become a problem, in particular in networks 1000 allowing smart contracts to be implemented. Smart contracts generally referred to contracts recorded as programs in a distributed ledger implemented by an electronic network 1000, such as illustrated in figure 1, and can take various forms based on the needs of the users subscribing the contract. The program implements characteristics of the contract such as transfer of rights and/or money, and can implement conditional statements based on several variables. As with more traditional contracts, it however is often impossible to draft the contract in a Turing complete language codified manner, such that the outcome of the contract can be reliably evaluated by a computer. To the contrary, it is often the case and that one or more of the parties involved in a contract feels that the other party has not upheld its duties, thus leading to conflicts.

Such conflicts are particularly complicated to be solved when applied to smart contract due to the above indicated anonymity which makes it difficult, if not impossible, for one party to legally prosecute the other party. Moreover, as smart contracts can be subscribed electronically, it is highly likely that the two parties to a smart contract may not live in the same legal jurisdiction, thus making it highly complex, if not impossible, for one party to enforce his rights in a classic legal manner.

For example, a first transaction address 1101 may want to purchase an article drafting service from a second transaction address 1102. In particular, the first transaction address 1101 intends to acquire three articles on a new product and agrees to pay an amount X per article, thus 3X in total. First transaction address 1101 and second transaction address 1102 can then create an appropriate smart contract implementing the above agreement. In some cases, first transaction address 1101 can deposit 3X into the smart contract, to be held in escrow until second transaction address 1102 completes the assignment. As soon as the assignment is completed, first transaction address 1101 can unlock the escrow and the funds can be transferred to the second transaction address 1102.

There are then three possible outcomes to this situation.

In case of no disputes, second transaction address 1102 completes the task and delivers all three articles. First transaction address 1101 will then authorize the smart contract to disperse the escrowed 3X amount to second transaction address 1102 and the smart contract will be completed.

In case the second transaction address 1102 is only able to complete a single article, first transaction address 1101 cannot unlock the escrowed amount as that would imply transferring the entire 3X amount for an incomplete work. As smart contract cannot usually be amended, a new smart contract would be needed, provided the two transaction addresses can agree on its content. For instance, in the new contract, first transaction address 1101 can propose of paying an amount X to the second transaction address 1102 for the services already performed. This solution requires creating more than one smart contract and it relies on the two transaction addresses 1101 and 1102 being capable of reaching an agreement.

Moreover, even if it possible to amend the smart contract, there currently is no solution which ensures that the two transaction addresses 1101 and 1102 will reach an agreement. In the absence of this certainty, the use of smart contract remains limited as the owner transaction addresses 1101 and 1102, often anonyms and operating from different jurisdictions, may not be capable or may not finding it cost efficient to solve their dispute through a legal action, as would be the case in a normal contract.

In a third option, first transaction address 1101 may not intend to pay X for the only one article delivered, being of the opinion that the only one article does not provide him with enough material for his new product. First transaction address 1101 thus only intends to pay 0.5X to second transaction address 1102. Second transaction address 1102 does not accept this proposal. In this case both parties suffer from the situation as the second transaction address 1102 is not paid at all and the first transaction address 1101 has a total of 3X blocked in an escrow.

The present invention has been developed in view of the above problems and it is an object thereof to provide a method for controlling a smart contract, which allows a more efficient use of the network 1000 allowing to improve on at least some of the drawbacks of the prior art.

### Summary of the invention

The present invention generally relies on the principle that an additional kind of entity can be added to the network so as to operate as a voting address.

The presence of the voting addresses allows the network 1000 to implement a voting function in which a smart contract which is in a disputed state among two transaction addresses 1201-1203 can be resolved based on the one or more possible outcomes of which the voting addresses can vote. The network 1000 thereby allows the transaction addresses 1201-1203 to be ensured that the situation in which the smart contract cannot be concluded is avoided.

Moreover, the network 1000 can implement a redistribution mechanism for voting tokens which ensures that voting addresses exhibiting a behavior which is not shared by the majority of the network 1000 will progressively lose their voting tokens, thereby stabilizing the operation of the network 1000.

An embodiment of the invention can relate to a method for controlling a smart contract in a network implementing a distributed ledger, the network comprising a plurality of transaction addresses and a plurality of voting addresses, the method comprising the steps of: defining details of a smart contract, wherein the details comprise at least an escrow amount and conditions for dispersing the escrow amount, accepting the details of the smart contract, evaluating fulfillment of the conditions, based on the result of the evaluating step dispersing the escrow amount or entering a dispute resolution step.

In some embodiments the dispute resolution step can comprise: a first step of amending, by a first transaction address, at least part of the details, a first step of evaluating by a second transaction address, the details amended in the first amending step.

In some embodiments the dispute resolution step can comprise: a second step of amending, by the second transaction address, at least part of the details, a second step of evaluating by the first transaction address, the details amended in the second amending step.

In some embodiments the dispute resolution step can comprise a network-based resolution step comprising the steps of: voting by one or more voting addresses, wherein voting comprises associating one or more voting tokens to one among a plurality of options, ending the voting step, when a predetermined amount of time has elapsed or when one of the plurality of options reaches a predetermined voting ratio, thereby resulting in a voted option and one or more non-voted options, transferring voting tokens associated to the one or more non-voted options to the voting addresses whose voting tokens are associated to the voted option.

In some embodiments a first voting address and a second voting address can have associated voting rights to the voted option, and the first voting address can have carried out the voting step before the second voting address, the transferring step can be based on a transferring function which comprises a monotonically decreasing function for transferring the voting tokens, associated to the one or more non-voted options, to the first voting address and to the second voting address, such that for each voting token associated to the voted option, the first voting address receives more voting tokens than the second voting address.

In some embodiments a first voting address and a second voting address can have associated voting rights to the voted option, and the first voting address can have associated more voting rights to the voted option than the second voting address, the transferring step can be based on a transferring function which comprises a monotonically decreasing function for transferring the voting tokens, associated to the one or more non-voted options, to the first voting address and to the second voting address, such that for each voting token associated to the voted option, the first voting address receives less voting tokens than the second voting address.

In some embodiments the transferring step can be based on a transferring function which, for a first voting address (2301-2303) is defined as:
- If
   user_start_votes_majority + user_votes_majority <= sum_votes_best_minority + C2 then the first voting address (2301-2303) receives
   user_votes_majority * reward_multiplier,
- If
   user_start_votes_majority >= sum_votes_best_minority + C3 then the first voting address (2301-2303) receives no voting tokens,
- If
   user_start_votes_majority < sum_votes_best_minority + C4
   and
   user_start_votes_majority + user_votes_majority >= sum_votes_best_minority + C5
   then
   the first voting address (2301-2303) receives
   (sum_votes_best_minority + C6) - user_start_votes_majority) * reward_multiplier,
wherein
- majority_option is a variable defined as the voted option,
- minority_option_best is a variable defined as a non-voted option that received the second most voting tokens,
- sum_votes_all_minority is a variable defined as sum of all voting tokens associated to all non-voted options,
- sum_votes_best_minority is a variable defined as sum of all voting tokens associated to minority_option_best,
- sum_votes_majority is a variable defined as sum of all voting tokens associated to majority_option,
- reward_multiplier is a variable defined as (sum_votes_all_minority) / (sum_votes_best_minority + C1),
- user_start_votes_majority is a variable defined as sum of all voting tokens associated to the majority_option before the first voting address (2301) associated its voting tokens,
- user_votes_majority is a variable defined as votes associated to the majority_option by the first voting address (2301),
- any of C1, C2, C3, C4, C5, C6 is a predetermined value which may be preferably set to be higher than 0, even more preferably at a value of 0.1.

In some embodiments voting addresses can carry out the voting step only if an amount of voting tokens they intend to associate is above a predetermined threshold.

### Short description of the figures

Figure 1 schematically illustrates a network 1000 implementing a distributed ledger in accordance with the state of the art;
Figure 2 schematically illustrates a network 2000 implementing a distributed ledger in accordance with an embodiment of the invention;
Figure 3 schematically illustrates a method 3000 in accordance with an embodiment of the invention;
Figure 4 schematically illustrates a smart contract 4000 in accordance with an embodiment of the invention;
Figure 5 schematically illustrates a dispute resolution step S3500 in accordance with an embodiment of the invention;
Figure 6 schematically illustrates a network-based dispute resolution step S3550 in accordance with an embodiment of the invention.

### Detailed description of preferred embodiments

Although the invention can find application with different kind of distributed ledgers, in the following description embodiments can be explained, for ease of understanding through examples, with reference to specific embodiments relating to an Ethereum implementation. It will however be understood that the invention is not limited to this specific implementation.

Figure 2 schematically illustrates a network 2000 implementing a distributed ledger in accordance with an embodiment of the invention. Although only the various elements 1101-1103, 1201-1202 and 2301-2303 are schematically illustrated, it will be clear that those elements can be connected to each other by means of a network, such as the Internet. The interconnections are however not illustrated, for clarity of representation.

The network 2000 differs from network 1000 due to the presence of voting addresses 2301-2303. Voting addresses 2301-2303 could be, in practice, implemented by any electronic equipment capable of exchanging information within network 2000, for instance, a computer. In general, voting addresses 2301-2303 are capable of exchanging information with the remaining elements in the network 2000, in particular with transaction addresses 1101-1103. It will furthermore be clear that a voting address 2301-2303 can be implemented by an electronic equipment already implementing a transaction address 1101-1103. In other words, a single physical address may act as a voting address 2301-2303 and/or as a transaction address 1101-1103, by either using two different logical addresses or the same logical address. The voting addresses 2301-2303 allow the network 1000 to perform a network-based resolution step S3500, as will be described in the following.

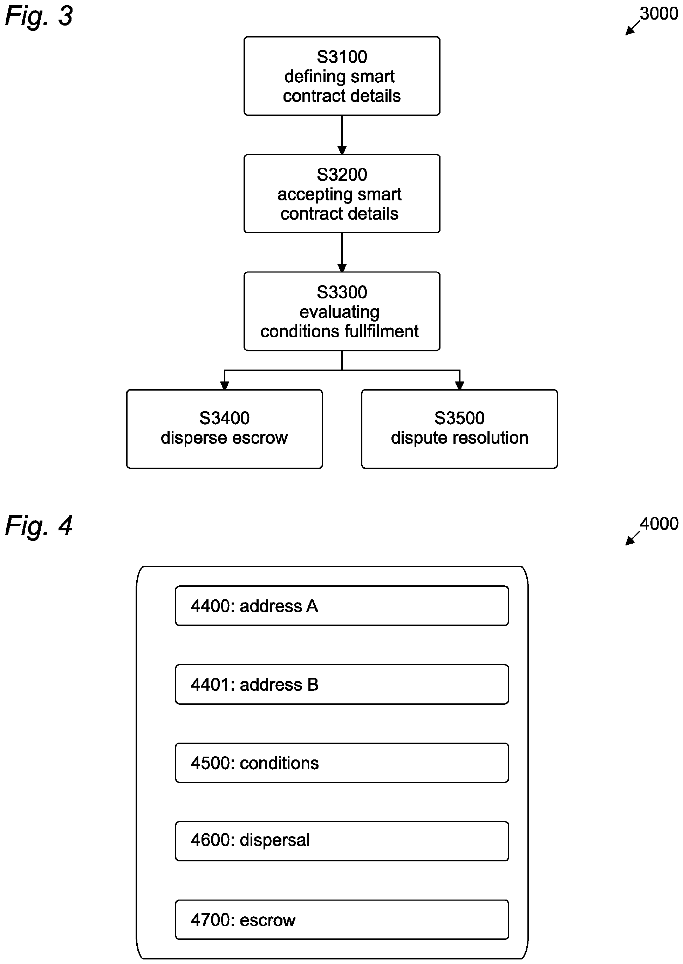

Figure 3 schematically illustrates a method 3000 in accordance with an embodiment of the invention while figure 4 schematically illustrates a smart contract 4000 in accordance with an embodiment of the invention.

The smart contract 4000 comprises at least:
- address A 4400, a variable corresponding to one of the transaction addresses 1101-1103,
- address B 4401, a variable corresponding to another one of the transaction addresses 1101-1103,
- conditions 4500, a variable identifying the contractual agreement between Address A and Address B, preferably encoded as a hash of arbitrary data stored outside of the distributed ledger, so as to advantageously reduce the amount of data to be processed by the ledger computing nodes 1201, 1202,
- dispersal 4600, a variable identifying how the escrow funds must be dispersed once the contractual agreement is considered to have been fulfilled, and
- escrow 4500, a variable identifying the amount of escrowed funds.

In some embodiments, the dispersal 4600 and the escrow 4700 can each be a variable identifying a single numerical value. For instance, in a smart contract between A and B in which A agrees to pay B an amount X for a given service, both the dispersal 4600 and the escrow 4700 can be set to X. It will however be clear to those skilled in the art that one or more of the dispersal 4600 and the escrow 4700 can be set to a plurality of values, for instance by using a vector. With regards to the escrow 4700, this may be convenient, for instance, to ensure A that B is committed to carry out the requested service and is willing to prove it with an escrow 4700 defined as [A, X, B, Y] meaning that address A has set an amount X in escrow and address B has set an amount Y in escrow. With regards to the dispersal 4600, this may be convenient, for instance, in the above example, in which upon completion of the contractual engagement B should receive the funds X as payment for the agreed service as well as the escrowed sums Y, in this example the dispersal 4600 may be defined as [A, 0, B, X+Y]. It will be clear that the size of the dispersal 4600 and of the escrow 4700 may also be larger, for instance in case of a smart contract 4000 involving more than two addresses.

As can be seen in figure 3, the method 3000 allows controlling the contract 4000 in a network 2000 implementing a distributed ledger, the network 2000 being for instance the one illustrated in figure 2 and comprising a plurality of transaction addresses 1101-1103 and a plurality of voting addresses 2301-2303.

The method 3000 comprises a first step S3100 of defining details 4500, 4600, 4700 of the smart contract 4000, wherein the details 4500, 4600, 4700 comprise at least an escrow amount 4700 and conditions 4500 for dispersing the escrow amount 4700. The defining step S3100 can be carried out by any transaction addresses 1101-1103, and in particular by address A or address B. Thanks to the defining step the smart contract 4000 is initialized to a first state.

In a subsequent accepting step S3200, the remaining addresses 4400, 4401 part to the smart contract 4000 accept the details 4500, 4600, 4700 of the smart contract 4000 set in the defining step S3100.

In some embodiments, either during the defining step S3100, or at the latest at the accepting step S3200, the addresses from which an escrow is required will transfer, either actively or automatically by an appropriate function of the smart contract 4000, the intended escrow amount 4700 to an escrow account. In an exemplary embodiment, which will be used throughout the description to exemplify method 3000, address A 4400 may agree to pay an amount X to address B 4401 for "writing three articles" recorded as conditions 4500 in form of an hash of externally saved data. The escrow 4700 may be then set to [A, X, B, 0] and the dispersal 4600 may be set to [A, 0, B, X].

The method 3000 further comprises a step of evaluating S3300 fulfillment of the conditions 4500. The evaluating step can be carried out at any time. In some embodiments it will be preferable to indicate a time for carrying out the evaluating step S3300 in the conditions 4500. The evaluating step cannot, in most cases, be carried out automatically by the network 2000, as generally the conditions 4500 cannot be either understood or checked by software. Instead, the evaluating step S3300 will be carried out by a communication among transaction addresses A and B and the network 2000. In particular, in some embodiments, one or more of the addresses A and B will inform the network 2000 of a positive or negative result of the evaluating step S3300.

Based on the result of the evaluating step S3300 the method 3000 further proceeds with dispersing the escrow amount S3400 or entering a dispute resolution step S3500.

In some embodiments, the method examines the escrow 4700 and, if only one of the addresses 4400, 4401 has an escrowed amount 4700 higher than zero, the method 3000 proceeds to the dispersing step S3400 if the address having the escrowed amount 4700 higher than zero inputs a positive outcome as result of the evaluating step S3300. If more than one of the addresses 4400, 4401 has an escrowed amount 4700 higher than zero, the decision on whether to proceed to the dispersing step S3400 depends from the outcome of the evaluating step S3300 for all addresses 4400, 4401 having an escrowed amount 4700 higher than zero. In particular, the method 3000 will proceed to the dispersing step S3400 only upon receiving a positive input from all addresses 4400, 4401 having an escrowed amount 4700 higher than zero. In this manner it can be prevented that the method proceeds to dispersing the escrowed amounts 4700 without consensus of the addresses 4400, 4401.

If the method proceeds to the dispersing step S3400, the escrowed amounts 4700 will be dispersed according to the dispersal 4600. In the above exemplary embodiment, if address A receives the agreed three articles from address B, it will provide a positive input as output to the evaluating step S3300, resulting in the escrowed amount X being transferred to B and the smart contract 4000 will terminate its operation.

On the other hand, if at least one of the addresses 4400, 4401 having an escrowed amount 4700 higher than zero provides a negative input as the result of the evaluating step S3300, the method proceeds to a dispute resolution step S3500.

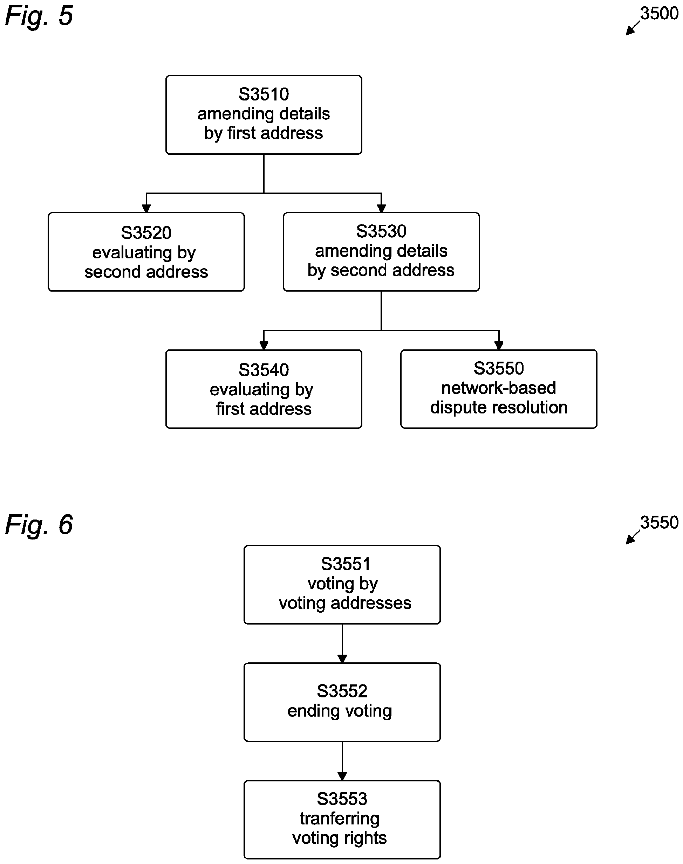

Figure 5 schematically illustrates a dispute resolution step S3500 in accordance with an embodiment of the invention. As can be seen in the figure, the dispute resolution step S3500 comprises a first step of amending S3510, by a first transaction address 1101-1103, at least part of the details 4500, 4600, 4700.

In particular, in some embodiments, the first transaction address 1101-1103 can be one of addresses A or B, or more preferably one of the addresses which provided a negative input as a result of the evaluating step S3300. In the amending step any of the details 4500, 4600, 4700 can be modified. In preferred embodiments, the conditions 4500 and/or the dispersal 4600 may be modified. By unilaterally amending the details 4500, 4600, 4700, the first transaction address 1101-1103, for instance address A, which wasn't satisfied of the previous outcome of the smart contract provides the second transaction address 1101-1103, for instance address B, with an amended version of the smart contract.

In some embodiments, the amendments may result in further data being added to the details 4500, 4600, 4700 instead of the replacement of the original data. For instance, with reference to the exemplary embodiment described above, address A originally agreed to pay address B an escrowed amount of X, so the originally agreed dispersal 4600 was [A, 0, B, X], and address A has paid X into escrow 4700, so the originally agreed escrow 4700 was [A, X, B, 0]. Address B delivers only one article, which results in a negative input of address A at the evaluating step S3300. At this point, address A can amend the dispersal 4600 to [A, 2X/3, B, X/3]. Alternatively, address A amend both the dispersal 4600 to [A, 0, B, X/3] and the escrow 4700 to [A, X/3, B, 0]. In this example the amendments is exemplified as overwriting the original data, it will however be clear that, in some embodiments, the amended data could instead be added to the vector.

In a subsequent evaluating step S3520, a second transaction address 1101-1103, thus the transaction address which has not amended the details in the first amending step S3510, evaluates the amended details. If the second transaction address 1101-1103 agrees with the amended details, this is signaled by a positive input similarly to the evaluating step S3300 and the smart contract is carried out with the amended details. For instance, with reference to the example above in which address A amended the dispersal 4600 to [A, 2X/3, B, X/3], a positive input to method 3000 by address B results in the transfer of 2X/3 to address A and of X/3 to address B and the smart contract 4000 is concluded.

In some embodiments, the dispute resolution step S3500 can further comprise a second amending step S3530, and a second evaluating step S3540, similar to the first amending step S3510, and to the first evaluating step S3520, except that the addresses carrying out the two steps are inversed. This gives an opportunity to both addresses to provide an agreed output to the dispute. It will be clear that the number of amending steps can be increased to accommodate a number of addresses 4400, 4401 taking part into the smart contract 4000, higher than two. In the embodiment illustrated in figure 5, second amending step S3530 is thus carried out by the second transaction address 1101-1103, and the second evaluating step S3540 is carried by the first transaction address 1101 -1103.

If this additional attempt to provide an agreed amended outcome is positive, the smart contract 4000 terminates as previously described. If this is not the case, the method 3000 proceeds to a further network-based resolution step S3550, schematically illustrated in figure 6.

In particular, the network-based resolution step S3550 comprises a step of voting S3551 by one or more voting addresses 2301-2303, wherein voting comprises associating one or more voting tokens to one among a plurality of options.

In some embodiments, the plurality of options can be the original details 4500, 4600, 4700 and the one or more amended details 4500, 4600, 470, amended in steps S3510, S3530. For instance, in case where the dispersal 4600 has been amended twice, the smart contract 4000 can be schematically illustrated as comprising
- address A 4400,
- address B 4401,
- conditions 4500,
- dispersal 4600, first amended dispersal 4600, second amended dispersal 4600
- escrow 4500.

With reference to the above example the dispersal 4600 may be encoded as [A, 0, B, X; A, 2X/3, B, X/3; A, X/3, B, 2X/3], assuming for instance that the amendments carried out by address B were [A, X/3, B, 2X/3].

Each voting address 2301-2303 can thus decide to associate one or more of its voting tokens to one of the available options. In some embodiments, the voting tokens may be implemented as tokens of the smart contract, also used for the payment of the escrow 4700. In some other embodiments, voting tokens and tokens used for the payment of the escrow 4700 may be different. The flexibility for each voting address 2301-2303 to associate any amount of voting tokens, among which owned by the voting address 2301-2303, is particularly advantageous in reducing the computational resources used by the method 3000, since in case of a clear option to solve the dispute, a limited amount of voting addresses 2301-2303 can associate a high number of voting tokens thus discouraging other voting addresses 2301-2303 from voting for other options and thereby reducing the computational resources used by the network 2000, since each voting operation results in use of computational resources. Conversely, in case a single voting address 2301-2303 decides to vote a clearly wrong option to solve the dispute, trying to sway the result by making use of a high number of voting tokens, a large number of remaining voting addresses 2301-2303 may recognize this attempt and correct it by summing their voting tokens for another option. As will become clearer in the following, such attempts to sway the dispute resolution by associating a high number of voting tokens to a wrong solution to the dispute is disincentivized by the transferring step S3553.

The voting step S3551 is carried out until the method 3000 reaches an ending step S3552, ending the voting step S3551. The ending step can be reached when a predetermined amount of time has elapsed or when one of the plurality of options reaches a predetermined voting ratio, thereby resulting in a voted option and one or more non-voted options. In some embodiments, the predetermined amount of time and/or the predetermined voting ratio can be set in respective variables of the smart contract 4000. Alternatively, or in addition, the network 2000 can set predefined values for the predetermined amount of time, for instance 24 hours, and/or the predetermined voting ratio, for instance 51%.

In some embodiments, the predetermined amount of time is extended if, at the end of the predetermined amount of time, the following condition is true. The predetermined amount of time is extended by a second further predetermined amount of time, for instance 180 minutes, preferably 60 minutes, even more preferably 30 minutes, after which this logic is reapplied recursively: if more than 1%, preferably more than 5%, even more preferably more than 10% of the total voting tokens which have been placed during the predetermined amount of time occurred in the last 30, preferably 60 minutes, even more preferably 180 minutes and there is no option with a majority.

As a result of the voting step, the option with has received the highest number of voting tokens is outputted as voted option. The method 3000 then proceeds to disperse the dispersal 4700 according to the voted option, so that the interaction between the transaction addresses 4400, 4401 is terminated.

Additionally, in order to provide a fair voting system and reduce the use of computation resources by the method 3000, and in particular by the network-based resolution step S3550, the method 3000 further comprises a subsequent transferring step S3553, in which voting tokens associated to the one or more non-voted options to the voting addresses 2301-2303 whose voting tokens are associated to the voted option.

In this manner, voting addresses 2301-2303 are incentivized to vote for the most reasonable option, which is also likely to be the most fair, to resolve the dispute.

In some embodiments, the votes associated to each option may be visible to all voting addresses 2301-2303. This advantageously reduces the use of computational resources by network 2000, since once an option has started to gain momentum and is generally seen as the most fair solution to the dispute, further voting is disincentivized, thus reducing the use of computational resources of network 2000.

In some embodiments, voting addresses 2301-2303 can only vote if the amount of voting tokens they intend to associate to the option they are voting for is above a predetermined threshold. In some embodiments, the threshold may be a function of the total number of voting tokens associated to all available options until that time, while in other embodiments it may be a function of the total number of voting tokens associated to the option which the voting address 2301-2303 intends to vote for, or to the total number of voting tokens associated until that moment. In some embodiments the function may be a percentage of the number of associated of associated voting tokens, preferably 0.1% of the associated voting tokens, more preferably 1% of the associated voting tokens even more preferably 10% of the associated voting tokens. In some embodiments, the percentage may increase with time.

Thanks to this approach it is possible to have a voting step which more quickly converges to a majority, thus making more efficient use of the computational resources of network 2000.

In the transferring step, voting tokens associated to the voted option are returned to the respective voting addresses 2301-2303, however not necessarily to all voting addresses and not necessarily in the same manner. In particular, voting tokens from voting addresses 2301-2303 which are associated to the one or more non-voted options are transferred to voting addresses 2301-2303 owning the voting tokens associated to the to the voted option. In some embodiments, the transfer may be based on a transferring function F1.

In particular, in some embodiments, the transferring function F1 can be computed as follows. Assuming that a first voting address 2301 and a second voting address 2302 have associated voting rights to the voted option, and the first voting address 2301 carried out the voting step S3551 before the second voting address 2302, then the transferring S3553 step can be based on a transferring function F1 which comprises a monotonically decreasing function for transferring the voting tokens, associated to the one or more non-voted options, to the first voting address 2301 and to the second voting address 2302, such that for each voting token associated to the voted option, the first voting address 2301 receives more voting tokens than the second voting address 2302.

In other words, for computing the number of voting tokens associated to the one or more non-voted options which have to be associated to the first voting address 2301 and to the second voting address 2302, the voting tokens associated to the voted option by the first voting address 2301 and the second voting address 2302 are multiplied by a transferring function F1 comprising a monotonically decreasing function as a function of the time at which the first voting address 2301 and the second voting address 2302 carried out the voting step S3551. Thus, as the time at which a voting address 2301-2303 carries out the voting step S3551 increases, the monotonically decreasing function has a decreasing value, resulting in a decreased redistribution of the voting tokens.

This is particularly advantageous as it incentivizes voting addresses 2301-2303 toward carrying out voting step S3551 as soon as possible, thus making the outcome of the step S3550 faster to converge. This advantageously means that, as the result of the voting step S3551 converges toward a clear result, other voting addresses 2301-2303 are disincentivized from voting, which reduces the number of times the network 2000 has to carry out and record the outcome of the voting step S3551, thus making a more effective use of the resources of the voting step S3551.

Alternatively, or in addition, in some embodiments, the transferring function F1 can be computed as follows. Assuming that a first voting address 2301 and a second voting address 2302 have associated voting rights to the voted option, and the first voting address 2301 associated more voting rights to the voted option than the second voting address 2302, then the transferring S3553 step can be based on a transferring function F1 which comprises a monotonically decreasing function for transferring the voting tokens, associated to the one or more non-voted options, to the first voting address 2301 and to the second voting address 2302, such that for each voting token associated to the voted option, the first voting address 2301 receives less voting tokens than the second voting address 2302.

In other words, for computing the number of voting tokens associated to the one or more non-voted options which have to be associated to the first voting address 2301 and to the second voting address 2302, the voting tokens associated to the voted option by the first voting address 2301 and the second voting address 2302 are multiplied by a transferring function F1 comprising a monotonically decreasing function as a function of the amount of voting rights associated to the voted option. Thus, as the amount of associated voting rights increases, the monotonically decreasing function has a decreasing value, resulting in a decreased redistribution of the voting tokens.

This is particularly advantageous as it avoids that one voting address 2301 controlling a vast amount of voting rights may be incentivized to single-handedly outvote a large number of voting addresses 2303. In other words, thanks to the presence of the monotonically decreasing function, participation in the voting step S3551 is incentivized, thus advantageously avoiding the voting step S3551 to be skewed by a reduced number of voting addresses 2301 using a large amount of voting addresses

As examples of a monotonically decreasing function can be the function 1/X, where, with respect to the two embodiments above, X is the time at which the voting step S3551 was carried out, preferably relative to the starting time of step S3550, or where X is the amount of voting tokens associated to the voted option. IT will however be clear that any monotonically decreasing function can be implemented.

Alternatively, or in addition, in some embodiments, the transferring step can be based on a transferring function F1. The transferring function F1 is based on the following values:
- majority_option is a variable defined as the voted option,
- minority_option_best is a variable defined as the non-voted option that received the second most voting tokens. In some embodiments, if two or more minority non-voted options receive equal voting tokens, one of those non-voted option is chosen arbitrarily to be the minority_option_best,
- sum_votes_all_minority is the sum of all voting tokens associated to all the non-voted options,
- sum_votes_best_minority is sum of all voting tokens associated on minority_option_best,
- sum_votes_majority is the sum of all voting tokens associated to the majority_option;
- reward_multiplier is defined as sum_votes_all_minority/(sum_votes_best_minority +C1). Here C1 is a predetermined value which may be preferably set to be higher than 0, even more preferably at a value of 0.1,
- user_start_votes_majority is the sum of all voting tokens associated to the majority_option before a given voting address 2301-2303, for which the transferring function F1 is computed, associated its voting tokens,
- user_votes_majority is the amount of votes associated on the majority_option by the given voting address 2301-2303.
so that the transferring function F1 can be computed, for any given voting address 2301-2303,as:
- If user_start_votes_majority + user_votes_majority <= sum_votes_best_minority + C2 then the voting address 2301-2303 receives user_votes_majority * reward_multiplier. Here C2 is a predetermined value which may be preferably set to be higher than 0, even more preferably at a value of 0.1,
- If user_start_votes_majority >= sum_votes_best_minority + C3 then the voting address 2301-2303 receives novoting tokens. Here C3 is a predetermined value which may be preferably set to be higher than 0, even more preferably at a value of 0.1,
- If user_start_votes_majority < sum_votes_best_minority + C4 and user_start_votes_majority + user_votes_majority >= sum_votes_best_minority + C5 then the voting address 2301-2303 receives (sum_votes_best_minority + C6) - user_start_votes_majority) * reward_multiplier. Here C4, C5, C6 are each a predetermined value which may be preferably set to be higher than 0, even more preferably at a value of 0.1,

Thanks to this implementation, voting addresses 2301-2303 which associated voting tokens on any of the non-voted options lose their voting tokens, and receive no additional voting tokens from the transferring function F1. For voting addresses 2301-2303 who voted on the final majority option, they are eligible to withdraw their original voting tokens plus the additional voting tokens determined by the function F1. As can be seen, this transferring function F1 further provides the advantage of incentivizing voting addresses 2301-2303 to cast their votes as soon as possible, thus enabling a faster convergence to a voted option, thereby making a more effective use of the network resources.

In some embodiments voting addresses 2301-2303 can only withdraw their tokens during a predetermined time, for instance 24 hours, after the method 3000 completes.

Moreover, in some embodiments, it may be possible for voting addresses 2301-2303 to exchange voting tokens by transferring them from a first voting address 2301-2303 to a second voting address 2301-2303. In this manner it is possible for a voting address to delegate its decision to another voting address which may have a deeper expertise in the dispute under consideration. As an alternative, in some cases, it may be possible for a first voting address to delegate a second voting address to associate voting tokens of the first voting address without moving the tokens from the first voting address to the second voting address. To this purpose, for example, the first voting address may allow control of a predetermined number of its voting tokens to the second voting address, in several manners which will be clear to those skilled in the art.

Although different embodiments have been described above as separate and various features have been described in combination with any given embodiment, the present invention in not limited to the embodiments described. To the contrary, singular features from any given embodiment can result into alternative embodiments. Moreover singular features from a plurality of embodiments can be combined so as to result into further alternative embodiments. The scope of the invention is thereby not limited by the illustrated drawing and the described embodiments but is instead defined by the claims.

### List of reference numerals

Figure 1
   1000: network
   1101-1103: transaction address
   1201-1202: ledger computing node
Figure 2
   2000: network
   2301-2303: voting address
Figure 3
   3000: method for controlling smart contracts
   S3100: defining smart contract details
   S3200: accepting smart contract details
   S3300: evaluating conditions fulfilment
   S3400: dispersing escrow
   S3500: dispute resolution
Figure 4
   4000: smart contract
   4400, 4401: transaction address
   4500: conditions
   4600: dispersal
   4700: escrow
Figure 5
   S3510: amending smart contract details
   S3520: evaluating amended smart contract details
   S3530: amending smart contract details
   S3540: evaluating amended smart contract details
   S3550: network-based dispute resolution
Figure 6:
   S3551: voting
   S3552: ending voting
   S3553: transferring voting tokens

## Claims

1. A method (3000) for controlling a smart contract (4000) in a network (2000) implementing a distributed ledger, the network (2000) comprising a plurality of transaction addresses (1101-1103) and a plurality of voting addresses (2301-2303), the method (3000) comprising the steps of:
defining (S3100) details (4500, 4600, 4700) of a smart contract (4000), wherein the details (4500, 4600, 4700) comprise at least an escrow amount (4700) and conditions (4500) for dispersing the escrow amount (4700),
accepting (S3200) the details (4500, 4600, 4700) of the smart contract (4000),
evaluating (S3300) fulfillment of the conditions (4500),
based on the result of the evaluating step (S3300) dispersing the escrow amount (S3400) or entering a dispute resolution step (S3500).

2. The method (3000) according to claim 1, wherein the dispute resolution step (S3500) comprises:
a first step of amending (S3510), by a first transaction address (1101-1103), at least part of the details (4500, 4600, 4700),
a first step of evaluating (S3520) by a second transaction address (1101-1103), the details amended in the first amending step (S3510).

3. The method (3000) according to claim 2, wherein the dispute resolution step (S3500) comprises:
a second step of amending (S3530), by the second transaction address (1101-1103), at least part of the details (4500, 4600, 4700),
a second step of evaluating (S3540) by the first transaction address (1101-1103), the details amended in the second amending step (S3530).

4. The method (3000) according to any previous claim, wherein the dispute resolution step (S3550) comprises a network-based resolution step (S3550) comprising the steps of:
voting (S3551) by one or more voting addresses (2301-2303), wherein voting comprises associating one or more voting tokens to one among a plurality of options,
ending (S3552) the voting step, when a predetermined amount of time has elapsed or when one of the plurality of options reaches a predetermined voting ratio, thereby resulting in a voted option and one or more non-voted options,
transferring (S3553) voting tokens associated to the one or more non-voted options to the voting addresses (2301-2303) whose voting tokens are associated to the voted option.

5. The method (3000) according to claim 4, wherein
a first voting address (2301) and a second voting address (2302) have associated voting rights to the voted option, and
the first voting address (2301) carried out the voting step (S3551) before the second voting address (2302),
the transferring (S3553) step is based on a transferring function (F1) which comprises a monotonically decreasing function for transferring the voting tokens, associated to the one or more non-voted options, to the first voting address (2301) and to the second voting address (2302), such that for each voting token associated to the voted option, the first voting address (2301) receives more voting tokens than the second voting address (2302).

6. The method (3000) according to claim 4, wherein
a first voting address (2301) and a second voting address (2302) have associated voting rights to the voted option, and
the first voting address (2301) associated more voting rights to the voted option than the second voting address (2302),
the transferring (S3553) step is based on a transferring function (F1) which comprises a monotonically decreasing function for transferring the voting tokens, associated to the one or more non-voted options, to the first voting address (2301) and to the second voting address (2302), such that for each voting token associated to the voted option, the first voting address (2301) receives less voting tokens than the second voting address (2302).

7. The method (3000) according to claim 4, wherein
the transferring (S3553) step is based on a transferring function (F1) which, for a first voting address (2301-2303) is defined as:
- If
user_start_votes_majority + user_votes_majority <= sum_votes_best_minority + C2 then the first voting address (2301-2303) receives
user_votes_majority * reward_multiplier,
- If
user_start_votes_majority >= sum_votes_best_minority + C3
then the first voting address (2301-2303) receives no voting tokens,
- If
user_start_votes_majority < sum_votes_best_minority + C4
and
user_start_votes_majority + user_votes_majority >= sum_votes_best_minority + C5 then
the first voting address (2301-2303) receives
(sum_votes_best_minority + C6) - user_start_votes_majority) * reward_multiplier,
wherein
- majority_option is a variable defined as the voted option,
- minority_option_best is a variable defined as a non-voted option that received the second most voting tokens,
- sum_votes_all_minority is a variable defined as sum of all voting tokens associated to all non-voted options,
- sum_votes_best_minority is a variable defined as sum of all voting tokens associated to minority_option_best,
- sum_votes_majority is a variable defined as sum of all voting tokens associated to majority_option,
- reward_multiplier is a variable defined as (sum_votes_all_minority) / (sum_votes_best_minority + C1),
- user_start_votes_majority is a variable defined as sum of all voting tokens associated to the majority_option before the first voting address (2301) associated its voting tokens,
- user_votes_majority is a variable defined as votes associated to the majority_option by the first voting address (2301),
- any of C1, C2, C3, C4, C5, C6 is a predetermined value which may be preferably set to be higher than 0, even more preferably at a value of 0.1.

8. The method (3000) according to claim 4, wherein
voting addresses (2301-2303 can carry out the voting step (S3551) only if an amount of voting tokens they intend to associate is above a predetermined threshold.
